# EUROPÄISCHE PATENTSCHRIFT

(11) **EP 3 489 293 B1**
(45) Veröffentlichungstag und Bekanntmachung des Hinweises auf die Patenterteilung: **12.07.2023**
(21) Anmeldenummer: 17203464.7
(22) Anmeldetag: 24.11.2017
(51) Int. Cl.: C08J 9/40, E04B 1/68

(54) **FUGENDICHTUNGSBAND, UMFASSEND EINE SCHAUMSTOFF ENTHALTEND WENIGSTENS EINEM PHASENWECHSELMATERIAL**
JOINT SEALING STRIP COMPRISING A FOAM CONTAINING AT LEAST ONE PHASE CHANGE MATERIAL
BANDE DE JOINT D'ÉTANCHÉITÉ, COMPRENANT UNE MOUSSE CONTENANT AU MOINS UN MATERIAL A CHANGEMENT DE PHASE

(43) Veröffentlichungstag der Anmeldung: 29.05.2019
(73) Patentinhaber: Hanno Werk GmbH & Co. KG, 30880 Laatzen (DE)
(72) Erfinder: Hohlfeld, Andreas, 31832 Springe (DE); Kethorn, Björn, 48346 Ostbevern (DE)
(74) Vertreter: Patentanwälte Thömen & Körner

(56) Entgegenhaltungen:
- EP-A1- 2 425 961
- EP-A2- 0 332 928
- WO-A2-2008/095931
- DE-A1- 19 929 861
- DE-A1-102008 024 652
- GB-A- 2 251 623
- US-A- 5 851 338
- US-A1- 2007 137 139

## Beschreibung

Die Erfindung betrifft ein Fugendichtungsband, das einen Schaumstoff aufweist, wobei das Fugendichtungsband komprimierbar und rückstellfähig ist, und die in Anspruch1 genannten Merkmale aufweist,

Komprimierbare Fugendichtungsbänder, die einen Schaumstoff aufweisen, sind zum Abdichten insbesondere gegen Luftzug und Schlagregen beispielsweise aus der DE 19641415 C2, der DE 20009674 U1 oder der WO 2012/167762 A1 bekannt und werden in der Bautechnik zum Abdichten insbesondere von Bauteilen, beispielsweise von Fenster- und Türrahmen, gegenüber einem Mauerwerk, beispielsweise einer Gebäudewandöffnung, oder einer Bewegungsfuge in einer Fassade verwendet. Vorgenannte Fugendichtungsbänder weisen wenigstens eine Membranschicht auf. Weitere Fugendichtungsbänder, die keine Membranschicht aufweisen, sind beispielsweise aus der DE 1 000 946 A, DE 40 20 230 A1 oder der DE 34 07 995 A1 bekannt.

Ein bekanntes Fugendichtungsband, das einen Schaumstoff umfasst, weist zwei Längsseiten sowie eine im Einbauzustand des Fugendichtungsbandes an die eine Fugenflanke, insbesondere eines Mauerwerks, angrenzende Oberseite und eine im Einbauzustand des Fugendichtungsbandes an die gegenüberliegende Fugenflanke, insbesondere des Bauteils, angrenzende Unterseite auf. Zwischen der Oberseite und Unterseite parallel bzw. nahezu parallel zu den Längsseiten können eine oder vorzugsweise mehrere Membranschichten jeweils in Längsrichtung verlaufen. Bekanntermaßen wird die Unterseite eines solchen Fugendichtungsbandes an dem abzudichtenden Bauteil, beispielsweise einem Fenster- und Türrahmen, angeklebt. Nach dem Einbau des Bauteils, beispielsweise in eine Gebäudewandöffnung, expandiert das zuvor komprimierte Fugendichtungsband, stellt sich also elastisch zurück, so dass die Oberseite des Fugendichtungsbandes am Mauerwerk der Gebäudewandöffnung angrenzt bzw. anliegt, und so das Bauteil am Mauerwerk der Gebäudewandöffnung abdichtet. Gattungsgemäße Fugendichtungsbänder werden zur Abdichtung auch in Fassadenfugen, insbesondere in Bestandsfugen, eingebracht.

Ausgehend von diesem Stand der Technik liegt der Erfindung die Aufgabe zugrunde, solche Fugendichtungsbänder, aber auch Bestandteile davon, mit neuen Funktionen auszubilden oder hinsichtlich bekannter Funktionen weiterzuentwickeln, insbesondere derart, dass sie die an sie gestellten Anforderungen hinsichtlich der Schlagregendichtheit, der Dampfdiffusionsoffenheit, der Wärmedämmung, der Luftdichtheit und/oder des Brandschutzes besser erfüllen.

Diese Aufgabe wird wenigstens teilweise r mit einem Fugendichtungsband, das die in Anspruch 1 genannten Merkmale aufweist, gelöst. Weiterbildungen und vorteilhafte Ausgestaltungen der Erfindung ergeben sich aus der nachfolgenden Beschreibung sowie den Unteransprüchen.

Erfindungsgemäß ist bei einem komprimierbaren und rückstellfähigen Fugendichtungsband, das einen Schaumstoff umfasst, vorgesehen, dass der Schaumstoff mit wenigstens einer Substanz ausgerüstet ist, die abhängig von den Umgebungsbedingungen Wärme aufnimmt, speichert und abgibt, wobei es sich bei der Substanz, die abhängig von den Umgebungsbedingungen Wärme aufnimmt, speichert und abgibt, um ein Phasenwechselmaterial, nämlich PCM, handelt.

Dadurch, dass der Schaumstoff mit wenigstens einer Substanz ausgerüstet ist, die abhängig von den Umgebungsbedingungen Wärme aufnimmt, speichert und abgibt, wobei es sich bei der Substanz, die abhängig von den Umgebungsbedingungen Wärme aufnimmt, speichert und abgibt, um ein Phasenwechselmaterial, nämlich PCM, handelt, wird erreicht, dass im unmittelbaren Anwendungsbereich des Schaumstoffs bzw. des Fugendichtungsbandes Temperaturschwankungen abgemildert werden. Es erfolgt also eine Wärmeregulierung. So kann beispielsweise verhindert werden, dass die Oberflächentemperatur des Schaumstoffs bzw. des Fugendichtungsbandes einen Wert annimmt, der zu einem Tauwasseranfall auf der Oberfläche oder im Innern des Schaumstoffs bzw. des Fugendichtungsbandes führt. Das Auftreten von Tauwasser auf der Oberfläche oder im Innern von Bauteilen kann nachteilig dazu führen, dass an den betroffenen Stellen Schimmelpilze entstehen, die nicht nur optisch stören, sondern auch gesundheitsgefährdend sein können. Durch die Belastung mit Tauwasser besteht zudem die Gefahr, dass die Materialien der den Schaumstoff bzw. das Fugendichtungsband umgebenden Konstruktion, insbesondere der Fugenflanken, geschädigt werden. Ferner kann durch einen Tauwasseranfall im Innern einer Fuge die Wärmeleitfähigkeit des Schaumstoffs derart verschlechtert werden, dass es zu weiterem Tauwasseranfall und somit zu einer Dauerdurchfeuchtung der Fuge kommt.

Es kann von Vorteil sein, wenn der Schaumstoff mit wenigstens einer Substanz ausgerüstet ist, die abhängig von den Umgebungsbedingungen Feuchtigkeit aufnimmt, speichert und abgibt, wobei die Substanz, die abhängig von den Umgebungsbedingungen Wärme aufnimmt, speichert und abgibt, eine andere ist als die Substanz, die abhängig von den Umgebungsbedingungen Feuchtigkeit aufnimmt, speichert und abgibt.

Dadurch, dass der Schaumstoff mit wenigstens einer Substanz ausgerüstet ist, die abhängig von den Umgebungsbedingungen Feuchtigkeit aufnimmt, speichert und abgibt, wird erreicht, dass im Anwendungsbereich des Schaumstoffs Feuchtigkeitsspitzen abgefangen werden, beispielsweise in Feuchträumen oder Räumen mit erhöhter Feuchtelast gemäß WTA-Merkblatt 6-2-01/D. Der Schaumstoff erhält durch die wenigstens eine Substanz die Fähigkeit, Feuchtigkeit im Anwendungsbereich des Schaumstoffs zu regulieren. Der Schaumstoff wirkt also als Puffer für die Luftfeuchtigkeit und kann diese ausgleichen. Der Schaumstoff nimmt über die wenigstens eine Substanz in Abhängigkeit der Umgebungsbedingungen, beispielsweise bei Vorliegen von Feuchtigkeitsspitzen, Feuchtigkeit auf, speichert diese und gibt diese, wenn sich die Umgebungsbedingungen wieder in die entgegengesetzte Richtung ändern, zeitverzögert ab. Dadurch, dass die Feuchtigkeit nicht oberflächlich, sondern innerhalb des Schaumstoffs, in dem die wenigstens eine Substanz angeordnet ist, gespeichert wird, ist auch keine Gefahr einer Schimmelpilzbildung zu befürchten. Auch die Gefahr, dass Materialien der den Schaumstoff bzw. das Fugendichtungsband umgebenden Konstruktion, insbesondere der Fugenflanken, geschädigt werden, wird verringert. Außerdem handelt es sich nicht um freie Feuchtigkeit, sondern vielmehr um chemisch und/oder physikalisch gebundene Feuchtigkeit.

Ein erfindungsgemäßes Fugendichtungsband, das einen Schaumstoff aufweist, ist somit in der Lage in dessen Anwendungsbereich, also der Fuge, Temperatur- und Feuchtigkeitsschwankungen auszugleichen und abzumildern. Dadurch wird die Fuge weniger belastet. Insbesondere wird die Gefahr eines Tauwasseranfalls verringert. Auch bei niedrigeren Umgebungstemperaturen, wie sie beispielsweise in der Nacht vorkommen, bleibt die mit dem erfindungsgemäßen Fugendichtungsband versehene Fuge vergleichsweise warm und hält eine vorhandene Feuchtigkeit.

Insgesamt wird so der Wärme- und Feuchtigkeitshaushalt innerhalb der Fuge positiv beeinflusst.

Unter dem Begriff "Ausrüsten" wird nicht die Zugabe der Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, zu den Ausgangsmaterialien zur Herstellung des Schaumstoffs verstanden, sondern das Versehen eines bereits hergestellten Schaumstoffs mit der Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt,.

Für einige Anwendungen kann es aber auch vorteilhaft sein, wenn die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, bereits wenigstens einem Ausgangsmaterial zur Herstellung des Schaumstoffs, insbesondere im Schäumprozess, zugegeben wird.

Es kann vorteilhaft sein, wenn der Schaumstoff mit einer Imprägniermasse imprägniert ist, wobei die Imprägniermasse die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, enthält.

Verfahren zum Imprägnieren eines Schaumstoffs mit einer Imprägniermasse sind dem Fachmann bekannt. Üblicherweise dient die Imprägnierung dazu, das Schaumstoff umfassende Fugendichtungsband mit einem verzögerten Rückstellverhalten auszubilden. Darüber hinaus kann das den Schaumstoff aufweisende Fugendichtungsband durch das Imprägnieren mit einer Imprägniermasse mit weiteren Funktionalitäten, insbesondere einer wasserabweisenden Wirkung, einer Luftdichtheit, einem Flammschutz, einer Farbe oder einem UV-Schutz, ausgerüstet werden.

Bei der Imprägniermasse handelt es sich vorzugsweise um eine Lösung oder Dispersion der Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt. Diese Lösung oder Dispersion kann zusätzlich zu der Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, auch bekannte Füllstoffe und/oder Hilfsstoffe, beispielsweise Schichtsilikate, Tonmineralien, Metalloxide, Metallhydroxide, Glaskugeln, thermoexpandierbare Substanzen, Ruß, Farbpigmente, Flammschutzmittel, Hydrophobierungsmittel und dergleichen, enthalten.

Es kann vorteilhaft sein, wenn die Imprägniermasse ein Bindemittel, vorzugsweise eine wässrige Dispersion auf Basis eines Acrylsäureesters, besonders bevorzugt eine wässrige Dispersion eines Polyacrylsäurebutylesters umfasst.

Für einige Anwendungen kann es auch vorteilhaft sein, wenn die Imprägniermasse ein Bindemittel auf Polyurethanbasis umfasst.

Für gewisse Anwendungen kann es auch vorteilhaft sein, wenn die Imprägniermasse ein Bindemittel auf Wachsbasis umfasst.

Für bestimmte Anwendungen kann es auch vorteilhaft sein, wenn die Imprägniermasse ein Bindemittel auf Bitumenbasis umfasst.

Durch das Imprägnieren wird das Raumgewicht des imprägnierten Schaumstoffs nach seiner Trocknung im Vergleich zu einem nicht imprägnierten Schaumstoff erhöht.

Üblicherweise wird der Schaumstoff mit einer Imprägniermasse getränkt, indem der Schaumstoff in die Imprägniermasse eingetaucht wird, so dass die Imprägniermasse, bevorzugt mit Hilfe von Tauch- oder Quetschwalzen, in die Poren des Schaumstoffs eindringt und diesen vollständig durchdringt. Die Imprägniermasse füllt also die Poren des Schaumstoffs aus. Vorzugsweise wird hierzu ein offenporiger Schaumstoff verwendet. Nach dem Imprägnieren wird der Schaumstoff mittels mindestens einer Walze, insbesondere mit einem Walzenpaar, gewalzt. Mittels der wenigstens einen Walze wird ein Teil der Imprägniermasse aus dem Schaumstoffkörper bis zum gewünschten Imprägnierungsgrad aus- bzw. abgequetscht. Durch Variation des Walzendruckes kann der Imprägnierungsgrad, das heißt die Menge der vom Schaumstoff aufgenommenen Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, variiert werden. Anschließend wird der Schaumstoff getrocknet und geschnitten.

Es kann vorteilhaft sein, wenn der Schaumstoff zusätzlich zur Imprägnierung oder an Stelle der Imprägnierung mit der Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, ein- oder mehrseitig beschichtet ist.

Ist eine hohe Konzentration der Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, im Schaumstoff erwünscht, kann es vorteilhaft sein, wenn der Schaumstoff zusätzlich zur Imprägnierung bzw. bei Schaumstoffen mit überwiegend geschlossenzelliger Struktur an Stelle der Imprägnierung mit der wenigstens einen Substanz ein- oder mehrseitig beschichtet ist.

Durch die Imprägnierung und/oder Beschichtung ist es möglich, große Mengen der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, in und/oder auf den Schaumstoff zu bringen.

Es ist auch möglich, den Schaumstoff unter Druck bzw. im Vakuum oder mit Hilfe einer Sprüheinrichtung zu imprägnieren bzw. zu beschichten.

Die Konzentration der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, im Schaumstoff kann auch durch die Konzentration der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, in der Imprägniermasse beeinflusst werden.

Durch Kombination der vorgenannten Parameter "Konzentration der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, in der Imprägniermasse", "Walzenspalt beim Abquetschen" und gegebenenfalls "zusätzliche Beschichtung" kann das Verhältnis Schaumstoff, Bindemittel, weitere Füllstoffe und/oder Hilfsstoffe zu der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt eingestellt werden.

Es kann vorteilhaft sein, wenn es sich bei der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, um einen Feststoff handelt. Ein solcher lässt sich üblicherweise gut handhaben.

Es kann vorteilhaft sein, wenn die mittlere Partikelgröße d₅₀ der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, weniger als 500 µm, vorzugsweise weniger als 100 µm, ganz besonders bevorzugt weniger als 10 µm, noch bevorzugter weniger als 5 µm, beträgt.

Methoden zur Bestimmung der mittleren Partikelgröße d₅₀ sind dem Fachmann bekannt. Die mittlere Partikelgröße kann durch Erstellung einer Partikelgrößenverteilung ermittelt werden. Die Messung kann hierbei mittels Lichtstreuung, insbesondere mittels Laserdiffraktometrie oder Photonenkorrelationsspektroskopie, erfolgen.

Erfindungsgemäß handelt es sich bei der Substanz, die abhängig von den Umgebungsbedingungen Wärme aufnimmt, speichert und abgibt, um ein Phasenwechselmaterial, nämlich um so genanntes PCM bzw. phase change material. Phasenwechselmaterialien sind Materialien, deren latente Schmelzwärme, Lösungswärme oder Absorptionswärme wesentlich größer ist als die Wärme, die sie aufgrund ihrer normalen spezifischen Wärmekapazität, also ohne den Phasenumwandlungseffekt, speichern können. So hat Hartparaffin beispielsweise eine Schmelztemperatur zwischen 40°C und 70°C und eine Schmelzenthalpie von 200-240 kJ/kg, jedoch lediglich eine Wärmekapazität von ca. 2,1 kJ/kg K. Ein vorgefertigtes Verbundplattenelement zum Klimatisieren von Räumen mit einer Trägerplatte und unter Verwendung von PCM-Wärmespeichermaterial, welches über mikroverkapselte Wachse ein Wärmespeichervolumen besitzt und in einem temperaturbedingten Phasenwechsel diese gespeicherte Wärme wieder abgibt, ist aus der EP 2 039 844 A2 bekannt.

Als besonders geeignet hat sich eine Substanz, die abhängig von den Umgebungsbedingungen Wärme aufnimmt, speichert und abgibt, erwiesen, die unter der Bezeichnung Micronal^{®} PCM der BASF AG auf dem Markt erhältlich ist. Micronal^{®} PCM ist ein Phasenwechselmaterial, das innerhalb des Raumtemperaturbereiches, nämlich bei 21 °C, 23 °C oder 26 °C, einen Phasenwechsel von fest nach flüssig vollzieht und dadurch sehr große Mengen an Wärme speichern kann. Micronal^{®} PCM enthält im Kern einer Mikrokapsel, welche eine Größe von ca. 5 µm aufweist, ein Latentwärmespeichermaterial aus einer speziellen Wachsmischung. Diese absorbiert bei Temperaturanstieg über eine definierte Temperaturschwelle (21 °C, 23 °C oder 26 °C) die überschüssige Wärmeenergie und speichert diese im Phasenwandel. Bei Absenkung der Temperatur unter die Temperaturschwelle gibt die Kapsel diese gespeicherte Wärmeenergie wieder ab.

Es kann vorteilhaft sein, wenn es sich bei der Substanz, die abhängig von den Umgebungsbedingungen Feuchtigkeit aufnimmt, speichert und abgibt, um ein Calciumsilikat (CaSiOs) handelt. Wollastonit ist ein natürlich vorkommendes Mineral mit der entsprechenden chemischen Zusammensetzung. Calciumsilikate bilden ein mikroporöses Gerüst mit einer extrem hohen Kapillarität. Sie sind wärmedämmend, durch ihren hohen pH-Wert schimmelhemmend, diffusionsoffen und nicht brennbar. Durch ihren hohen Porenanteil haben sie eine geringe Dichte und sind sehr leicht.

Besonders geeignet ist eine Substanz, die abhängig von den Umgebungsbedingungen Feuchtigkeit aufnimmt, speichert und abgibt, als gemahlenes Produkt von Calciumsilikatplatten, die insbesondere unter der Bezeichnung "CaSi-Systems Wohnklimaplatte Premium" der CaSi-Systems Aktiengesellschaft oder unter der Bezeichnung "CASIPLUS" der CASIPLUS GmbH auf dem Markt erhältlich sind.

Geeignete Substanzen die abhängig von den Umgebungsbedingungen Feuchtigkeit aufnehmen, speichern oder abgeben, sind daher solche mit einem hohen so genannten MBV (moisture buffer value). Für bestimmte Anwendungsfälle kann die Verwendung von Cellulose als Substanz, die abhängig von den Umgebungsbedingungen Feuchtigkeit aufnimmt, speichert und abgibt, vorteilhaft sein. Für einige Anwendungsfälle kann die Verwendung von Gips als Substanz, die abhängig von den Umgebungsbedingungen Feuchtigkeit aufnimmt, speichert und abgibt, vorteilhaft sein. Für gewisse Anwendungsfälle kann die Verwendung von Natriumpolyacrylat als Substanz, die abhängig von den Umgebungsbedingungen Feuchtigkeit aufnimmt, speichert und abgibt, vorteilhaft sein. Für verschiedene Anwendungsfälle kann die Verwendung von Calciumsilikat als Substanz, die abhängig von den Umgebungsbedingungen Feuchtigkeit aufnimmt, speichert und abgibt, vorteilhaft sein. Für bestimmte Einsatzfälle kann die Verwendung von Lehm als Substanz, die abhängig von den Umgebungsbedingungen Feuchtigkeit aufnimmt, speichert und abgibt, vorteilhaft sein. Für einige Einsatzfälle kann die Verwendung von Gipskalk als Substanz, die abhängig von den Umgebungsbedingungen Feuchtigkeit aufnimmt, speichert und abgibt, vorteilhaft sein. Für gewisse Einsatzfälle kann die Verwendung von Rotkalk als Substanz, die abhängig von den Umgebungsbedingungen Feuchtigkeit aufnimmt, speichert und abgibt, vorteilhaft sein. Für verschiedene Anwendungsfälle kann die Verwendung eine Kombination einzelner oder aller vorgenannten Substanzen, die abhängig von den Umgebungsbedingungen Feuchtigkeit aufnehmen, speichern und abgeben als Substanz, die abhängig von den Umgebungsbedingungen Feuchtigkeit aufnimmt, speichert und abgibt, vorteilhaft sein.

Substanzen mit hohem MBV, die abhängig von den Umgebungsbedingungen Feuchtigkeit aufnehmen, speichern und abgeben, sind beispielhaft im Fachartikel "Moisture buffering capacity of highly absorbing materials, S. Cerolini, M. D'Orazio, C. Di Perna, A. Stazi, Energy and Buildings, February 2009" (https://www.researchgate.net/publication/223682985) beschrieben. Derartige Substanzen, die abhängig von den Umgebungsbedingungen Feuchtigkeit aufnehmen, speichern und abgeben, sind auch im Fachartikel "Die Entwicklung eines mineralischen Feuchtespeicher-Grundputzes, Dipl.-Ing. Thomas Stahl, Dr. Michael Holzer, Roger Vonbank, Bauphysik 35 (2013), Heft 5, S. 346-355, DOI: 10.1002/bapi.201310077" (http://sto.at/evo/web/sto/145010 DE-pdf-StoCalce Functio.pdf) genannt.

Es kann vorteilhaft sein, wenn es sich bei der Substanz, die abhängig von den Umgebungsbedingungen Feuchtigkeit aufnimmt, speichert und abgibt, um ein Zeolithe handelt.

Es kann vorteilhaft sein, wenn die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, derart dimensioniert ist, dass diese auf den Schaumstoff und/oder vorzugsweise in die Poren des Schaumstoffsdes Fugendichtungsbandes, bringbar ist.

Es kann vorteilhaft sein, wenn die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, im und auf dem Schaumstoff des Fugendichtungsbandes homogen verteilt ist. Es kann für einige Anwendungsfälle aber auch vorteilhaft sein, wenn die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, im und auf dem Schaumstoffüber die Breite und/oder über die Höhe des Fugendichtungsbandes inhomogen verteilt ist.

Es kann vorteilhaft sein, wenn die Imprägniermasse die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, in einer Menge von 5 bis 80 Gew.-% i.Tr., vorzugsweise von 5 bis 50 Gew.-% i.Tr., besonders bevorzugt von 20 bis 30 Gew.-% i.Tr., jeweils bezogen auf 100 Gew.-% i.Tr. Imprägniermasse enthält.

Es kann vorteilhaft sein, wenn der Schaumstoff offenzellig oder zumindest teilweise offenzellig ist.

Es kann vorteilhaft sein, wenn der Schaumstofffür das Fugendichtungsband ein Polyurethanschaumstoff ist.

Erfindungsgemäß ist der Schaumstoff rückstellfähig.

Es kann vorteilhaft sein, wenn der Schaumstoff nach einer Imprägnierung verzögert rückstellfähig ist.

Es kann vorteilhaft sein, wenn der Schaumstoff ein retikulierter Polyurethanschaumstoff ist.

Es kann vorteilhaft sein, wenn der Schaumstoff ein Melaminharzschaumstoff ist.

Vorzugsweise weist das Fugendichtungsband zwei Längsseiten sowie eine im Einbauzustand des Fugendichtungsbandes an die eine Fugenflanke angrenzende Ober- und eine im Einbauzustand des Fugendichtungsbandes an die gegenüberliegende Fugenflanke angrenzende Unterseite aufweist. Die Breite des Fugendichtungsbandes ist somit der Abstand zwischen zwei Längsseiten.

Der Schaumstoff eines Fugendichtungsbandes kann in mehrere Schaumstoffabschnitte oder Schaumstoffelemente unterteilt sein. Die Unterteilung kann sich beispielsweise durch wenigstens eine im Schaumstoff vorhandene Trennschicht, beispielsweise in Form einer Klebstoff- oder Membranschicht, oder durch ein unterschiedliches Höhenprofil ergeben. Es kann vorteilhaft sein, wenn ein oder mehr als ein Schaumstoffabschnitt oder Schaumstoffelement mit der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, ausgerüstet ist. Bei mehreren Schaumstoffabschnitten oder Schaumstoffelementen kann es vorteilhaft sein, wenn wenigstens zwei Schaumstoffabschnitte oder Schaumstoffelemente mit der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, entweder in gleicher oder in unterschiedlicher Konzentration ausgerüstet sind.

Es kann vorteilhaft sein, wenn mehrere Dichtbereiche innerhalb eines Fugendichtungsbandes vorgesehen sind.

Es kann vorteilhaft sein, wenn wenigstens zwei Schaumstoffabschnitte unterschiedliche Raumgewichte aufweisen.

Es kann zweckmäßig sein, wenn der Schaumstoff bzw. wenigstens ein oder jeder Schaumstoffabschnitt ein Polyurethan-Schaumstoff, vorzugsweise ein Polyurethan-Weichschaumstoff ist. Dieser stellt sich nach einer Vorkomprimierung besonders gut innerhalb der Fuge zurück und sorgt für eine dauerhafte Abdichtung.

Es kann vorteilhaft sein, wenn der Schaumstoff bzw. wenigstens ein oder jeder Schaumstoffabschnitt oder ein oder jedes Schaumstoffelement ein oder mehrere Funktionsbereiche aufweist, vorzugsweise einen ersten nach außen schlagregendichten Bereich, einen zweiten wärmedämmenden sowie schallmindernden Bereich und einen dritten nach innen luftdichten Bereich.

Es kann vorteilhaft sein, wenn nur der dritte nach innen luftdichte Bereich die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, aufweist.

Es kann vorteilhaft sein, wenn der wärmedämmende Bereich mit einer die Wärmeleitfähigkeit des Schaumstoffs oder des den Schaumstoff umfassenden Fugendichtungsbandes herabsetzenden Substanz ausgerüstet ist. Zur Offenbarung der die Wärmeleitfähigkeit des Schaumstoffs oder des den Schaumstoff umfassenden Fugendichtungsbandes herabsetzenden Substanz wird auf die EP 17 150 725.4 verwiesen. Der Offenbarungsgehalt der EP 17 150 725.4 wird durch ausdrücklichen Verweis als zum Gegenstand der vorliegenden Anmeldung gehörig in diese aufgenommen.

Es kann vorteilhaft sein, wenn die nach innen weisende Längsseite zusätzlich oder ausschließlich mit der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, beschichtet ist.

Es kann vorteilhaft sein, wenn die Ober- oder/und Unterseite zusätzlich oder ausschließlich mit der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, beschichtet ist.

Es kann zweckmäßig sein, wenn das Fugendichtungsband komprimierbar, vorzugsweise vorkomprimiert ist.

Vorteilhaft kann das Fugendichtungsband in Rollenform vorkomprimiert und verzögert rückstellfähig sein.

Vorzugsweise beträgt die Dicke des Fugendichtungsbandes im nicht komprimierten Zustand zwischen 10 mm und 100 mm, vorzugsweise zwischen 18 mm bis 60 mm.

Es kann vorteilhaft sein, wenn das Fugendichtungsband zur Abdichtung von Fugen zwischen zusammengefügten Bauelementen im Hausbau, insbesondere zwischen Wandöffnungen einer Außenwand und Fenster- oder Türrahmen, vorzugsweise ohne Zuhilfenahme zusätzlicher Fugenbändern oder Hinterfüllmaterialien, einsetzbar ist.

Es kann vorteilhaft sein, wenn das Fugendichtungsband zur Abdichtung von Fugen in einem Wärmedämmverbundsystem einsetzbar ist.

Es kann vorteilhaft sein, wenn das Fugendichtungsband zur Abdichtung von Fugen in einem an einer Vorwandmontagezarge einsetzbar ist.

Es kann von Vorteil sein, wenn das Fugendichtungsband einseitig selbstklebend ausgebildet ist. Die Seite kann vollflächig mit einer Selbstklebeschicht oder nicht vollflächig mit einer oder mehr als einer Selbstklebebahn beschichtet sein, welche vorzugsweise mit einem lösbaren Silikonpapier abgedeckt ist.

Weitere vorteilhafte Ausgestaltungen der Erfindung ergeben sich aus der Zeichnung in Zusammenhang mit deren Beschreibung, wobei nachfolgend die Erfindung anhand von Ausführungsbeispielen erläutert wird, die in der Zeichnung dargestellt sind. In dieser zeigen:

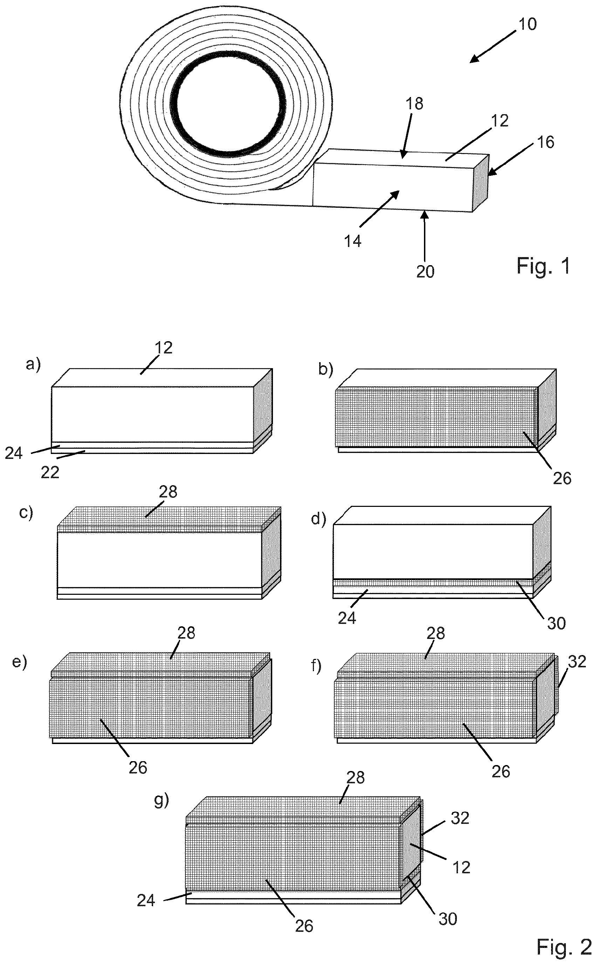

- Fig. 1: eine schematische Darstellung eines in Rollenform vorrätig gehaltenen und vorkomprimierten ersten Fugendichtungsbandes in Seitenansicht mit einem bereits abgerollten, zurückgestellten Abschnitt in perspektivischer Ansicht, wobei das Fugendichtungsband einen Schaumstoff aufweist,
- Fig. 2: in schematischer Darstellung Varianten des in Fig. 1 gezeigten Fugendichtungsbandes, jeweils mit einer auf der Unterseite angeordneten und mit einem Abdeckpapier versehenen Selbstklebeschicht, in Form eines Abschnitts a) gemäß Stand der Technik, b) mit einer die Substanz, die abhängig von den Umgebungsbedingungen Wärme aufnimmt, speichert und abgibt, aufweisenden Beschichtung auf einer Längsseite des Schaumstoffs, c) mit einer die Substanz, die abhängig von den Umgebungsbedingungen Wärme aufnimmt, speichert und abgibt, aufweisenden Beschichtung auf der Oberseite des Schaumstoffs, d) mit einer die Substanz, die abhängig von den Umgebungsbedingungen Wärme aufnimmt, speichert und abgibt, aufweisenden Beschichtung auf der Unterseite des Schaumstoffs, zwischen Schaumstoff und Selbstklebeschicht, e) mit einer die Substanz, die abhängig von den Umgebungsbedingungen Wärme aufnimmt, speichert und abgibt, aufweisenden Beschichtung auf einer Längsseite des Schaumstoffs und einer die Substanz, die abhängig von den Umgebungsbedingungen Wärme aufnimmt, speichert und abgibt, aufweisenden Beschichtung auf der Oberseite des Schaumstoffs, f) mit einer die Substanz, die abhängig von den Umgebungsbedingungen Wärme aufnimmt, speichert und abgibt, aufweisenden Beschichtung auf beiden Längsseiten des Schaumstoffs und mit einer die Substanz, die abhängig von den Umgebungsbedingungen Wärme aufnimmt, speichert und abgibt, aufweisenden Beschichtung auf der Oberseite des Schaumstoffs und g) mit einer die Substanz, die abhängig von den Umgebungsbedingungen Wärme aufnimmt, speichert und abgibt, aufweisenden Beschichtung auf beiden Längsseiten des Schaumstoffs sowie mit einer die Substanz, die abhängig von den Umgebungsbedingungen Wärme aufnimmt, speichert und abgibt, aufweisenden Beschichtung auf der Oberseite des Schaumstoffs und mit einer die Substanz, die abhängig von den Umgebungsbedingungen Wärme aufnimmt, speichert und abgibt, aufweisenden Beschichtung auf der Unterseite des Schaumstoffs, zwischen Schaumstoff und Selbstklebeschicht,

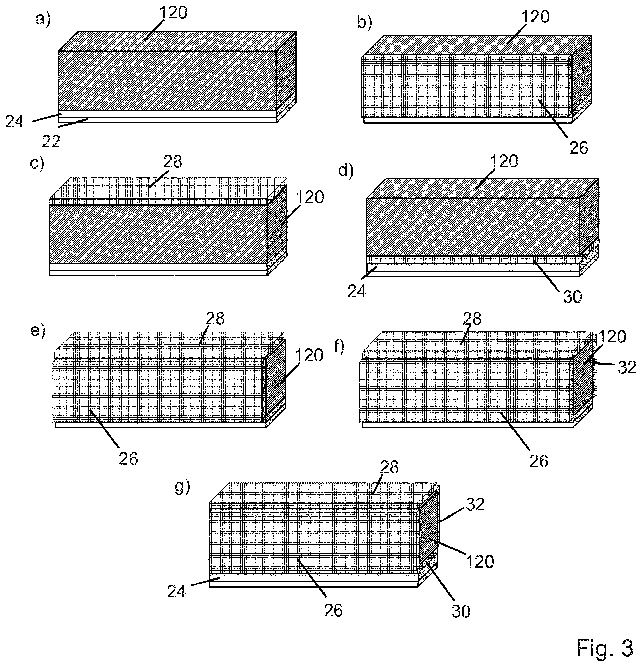

- Fig. 3: in schematischer Darstellung Varianten des in Fig. 1 gezeigten Fugendichtungsbandes, jeweils mit einer auf der Unterseite angeordneten und mit einem Abdeckpapier versehenen Selbstklebeschicht, in Form eines Abschnitts a) mit homogen im Schaumstoff verteilter Substanz, die abhängig von den Umgebungsbedingungen Wärme aufnimmt, speichert und abgibt, b) wie a), aber zusätzlich mit einer die Substanz, die abhängig von den Umgebungsbedingungen Wärme aufnimmt, speichert und abgibt, aufweisenden Beschichtung auf einer Längsseite des Schaumstoffs, c) wie a), aber zusätzlich mit einer die Substanz, die abhängig von den Umgebungsbedingungen Wärme aufnimmt, speichert und abgibt, aufweisenden Beschichtung auf der Oberseite des Schaumstoffs, d) wie a), aber zusätzlich mit einer die Substanz, die abhängig von den Umgebungsbedingungen Wärme aufnimmt, speichert und abgibt, aufweisenden Beschichtung auf der Unterseite des Schaumstoffs, zwischen Schaumstoff und Selbstklebeschicht, e) wie a), aber zusätzlich mit einer die Substanz, die abhängig von den Umgebungsbedingungen Wärme aufnimmt, speichert und abgibt, aufweisenden Beschichtung auf einer Längsseite des Schaumstoffs und mit einer die Substanz, die abhängig von den Umgebungsbedingungen Wärme aufnimmt, speichert und abgibt, aufweisenden Beschichtung auf der Oberseite des Schaumstoffs, f) wie a), aber zusätzlich mit einer die Substanz, die abhängig von den Umgebungsbedingungen Wärme aufnimmt, speichert und abgibt, aufweisenden Beschichtung auf beiden Längsseiten des Schaumstoffs und mit einer die Substanz, die abhängig von den Umgebungsbedingungen Wärme aufnimmt, speichert und abgibt, aufweisenden Beschichtung auf der Oberseite des Schaumstoffs und g) wie a), aber zusätzlich mit einer die Substanz, die abhängig von den Umgebungsbedingungen Wärme aufnimmt, speichert und abgibt, aufweisenden Beschichtung auf beiden Längsseiten des Schaumstoffs sowie mit einer die Substanz, die abhängig von den Umgebungsbedingungen Wärme aufnimmt, speichert und abgibt, aufweisenden Beschichtung auf der Oberseite des Schaumstoffs und mit einer die Substanz, die abhängig von den Umgebungsbedingungen Wärme aufnimmt, speichert und abgibt, aufweisenden Beschichtung auf der Unterseite des Schaumstoffs, zwischen Schaumstoff und Selbstklebeschicht,

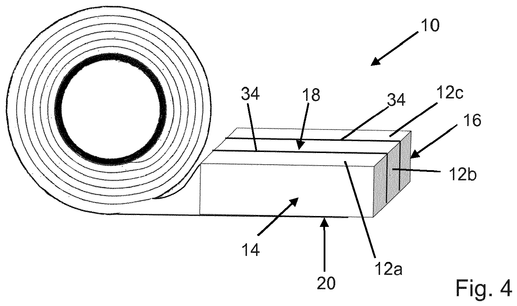

- Fig. 4: eine schematische Darstellung eines in Rollenform vorrätig gehaltenen und vorkomprimierten zweiten Fugendichtungsbandes in Seitenansicht mit einem bereits abgerollten, zurückgestellten Abschnitt in perspektivischer Ansicht, wobei das Fugendichtungsband drei Schaumstoffelemente aufweist,

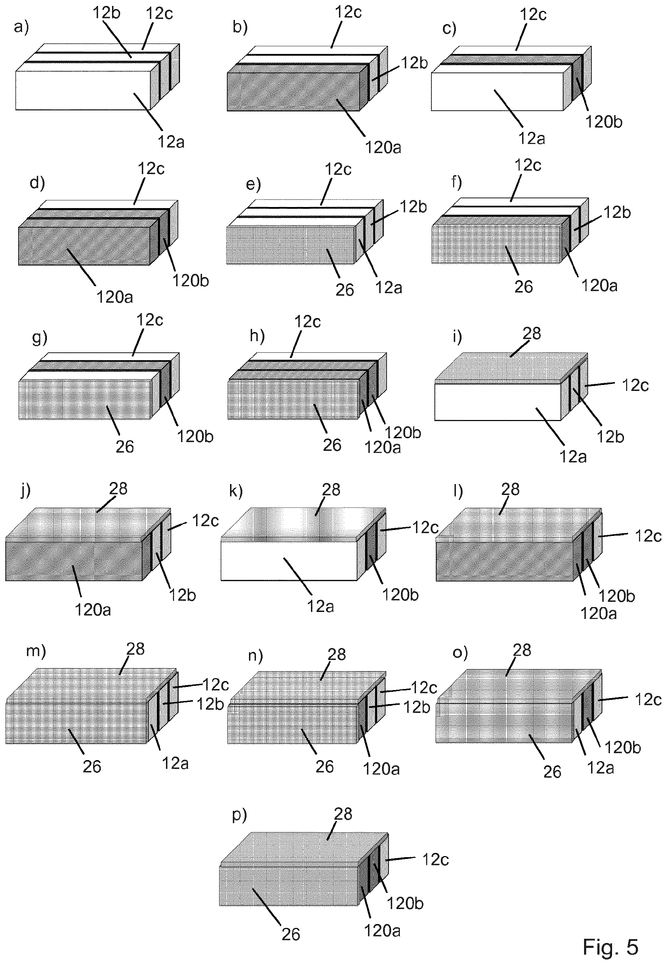

- Fig. 5: in schematischer Darstellung Varianten des in Fig. 4 gezeigten Fugendichtungsbandes, in Form eines Abschnitts a) gemäß Stand der Technik, b) mit homogen in einem außenliegenden Schaumstoffelement verteilter Substanz, die abhängig von den Umgebungsbedingungen Wärme aufnimmt, speichert und abgibt, c) mit homogen in einem innenliegenden Schaumstoffelement verteilter Substanz, die abhängig von den Umgebungsbedingungen Wärme aufnimmt, speichert und abgibt, d) mit homogen in einem außen- und in einem innenliegenden Schaumstoffelement verteilter eine Substanz, die abhängig von den Umgebungsbedingungen Wärme aufnimmt, speichert und abgibt, e) wie a), aber mit einer die Substanz, die abhängig von den Umgebungsbedingungen Wärme aufnimmt, speichert und abgibt, aufweisenden Beschichtung auf der Längsseite eines außenliegenden Schaumstoffelements, f) wie b), aber zusätzlich mit einer die Substanz, die abhängig von den Umgebungsbedingungen Wärme aufnimmt, speichert und abgibt, aufweisenden Beschichtung auf der Längsseite des außenliegenden eines die Substanz, die abhängig von den Umgebungsbedingungen Wärme aufnimmt, speichert und abgibt, aufweisenden Schaumstoffelements, g) wie c), aber zusätzlich mit einer die Substanz, die abhängig von den Umgebungsbedingungen Wärme aufnimmt, speichert und abgibt, aufweisenden Beschichtung auf einer Längsseite des außenliegenden Schaumstoffelements, h) wie d) aber zusätzlich mit einer die Substanz, die abhängig von den Umgebungsbedingungen Wärme aufnimmt, speichert und abgibt, aufweisenden Beschichtung auf der Längsseite des außenliegenden eines die Substanz, die abhängig von den Umgebungsbedingungen Wärme aufnimmt, speichert und abgibt, aufweisenden Schaumstoffelements, i) wie a), aber zusätzlich mit einer die Substanz, die abhängig von den Umgebungsbedingungen Wärme aufnimmt, speichert und abgibt, aufweisenden Beschichtung auf der Oberseite der Schaumstoffelemente, j) wie b), aber zusätzlich mit einer die Substanz, die abhängig von den Umgebungsbedingungen Wärme aufnimmt, speichert und abgibt, aufweisenden Beschichtung auf der Oberseite der Schaumstoffelemente, k) wie c) aber zusätzlich mit einer die Substanz, die abhängig von den Umgebungsbedingungen Wärme aufnimmt, speichert und abgibt, aufweisenden Beschichtung auf der Oberseite der Schaumstoffelemente, l) wie d), aber zusätzlich mit einer die Substanz, die abhängig von den Umgebungsbedingungen Wärme aufnimmt, speichert und abgibt, aufweisenden Beschichtung auf der Oberseite der Schaumstoffelemente, m) wie e), aber zusätzlich mit einer die Substanz, die abhängig von den Umgebungsbedingungen Wärme aufnimmt, speichert und abgibt, aufweisenden Beschichtung auf der Oberseite der Schaumstoffelemente, n) wie f), aber zusätzlich mit einer die Substanz, die abhängig von den Umgebungsbedingungen Wärme aufnimmt, speichert und abgibt, aufweisenden Beschichtung auf der Oberseite der Schaumstoffelemente, o) wie g) aber zusätzlich mit einer die Substanz, die abhängig von den Umgebungsbedingungen Wärme aufnimmt, speichert und abgibt, aufweisenden Beschichtung auf der Oberseite der Schaumstoffelemente, p) wie h), aber zusätzlich mit einer die Substanz, die abhängig von den Umgebungsbedingungen Wärme aufnimmt, speichert und abgibt, aufweisenden Beschichtung auf der Oberseite der Schaumstoffelemente;

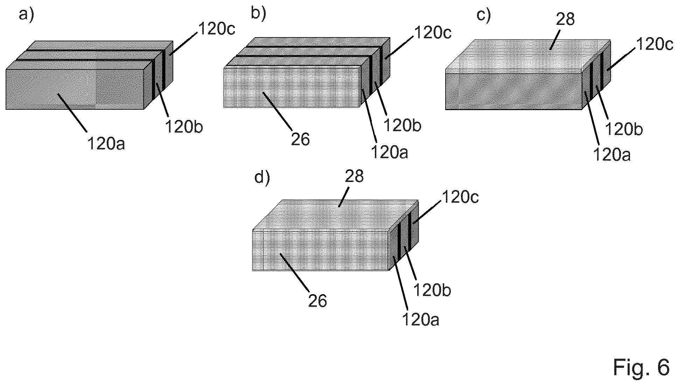

- Fig. 6: in schematischer Darstellung Varianten des in Fig. 4 gezeigten Fugendichtungsbandes, in Form eines Abschnitts a) mit homogen in jedem Schaumstoffelement verteilter Substanz, die abhängig von den Umgebungsbedingungen Wärme aufnimmt, speichert und abgibt, b) wie a), aber mit einer die Substanz, die abhängig von den Umgebungsbedingungen Wärme aufnimmt, speichert und abgibt, aufweisenden Beschichtung auf der Längsseite eines außenliegenden Schaumstoffelements, c) wie a), aber zusätzlich mit einer die Substanz, die abhängig von den Umgebungsbedingungen Wärme aufnimmt, speichert und abgibt, aufweisenden Beschichtung auf der Oberseite der Schaumstoffelemente, d) wie b), aber zusätzlich mit einer die Substanz, die abhängig von den Umgebungsbedingungen Wärme aufnimmt, speichert und abgibt, aufweisenden Beschichtung auf der Oberseite der Schaumstoffelemente,

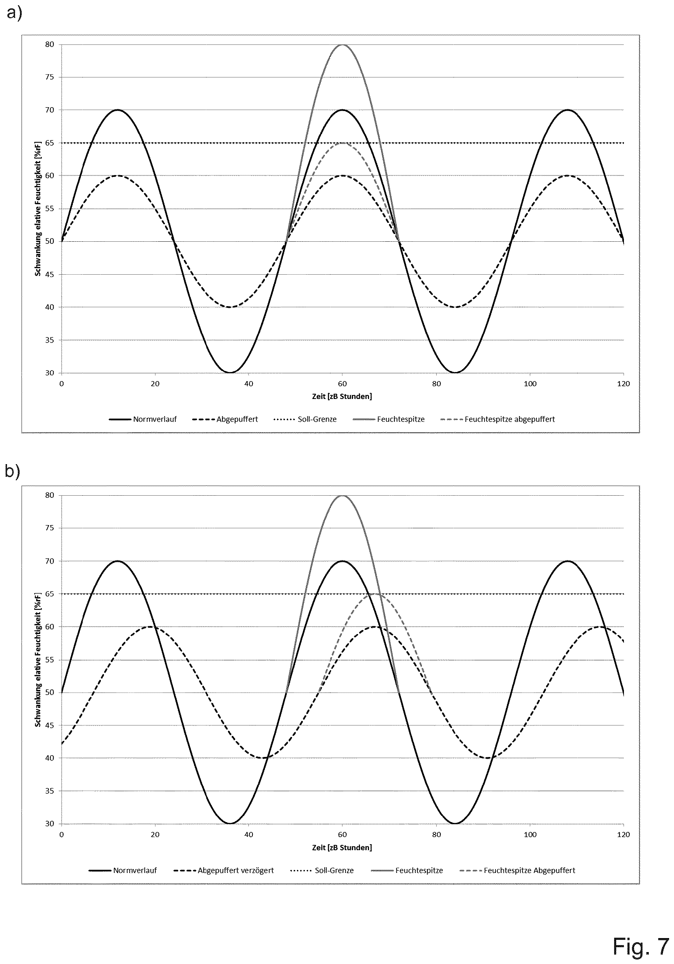

- Fig. 7: in schematischer Darstellung die in oder an einer Fuge auftretenden Schwankungen der relativen Luftfeuchtigkeit über einen Zeitraum bei Verwendung eines herkömmlichen Fugendichtungsbandes (durchgezogene Linie) und bei Verwendung eines Fugendichtungsbandes, das einen Schaumstoff aufweist, der mit der Substanz ausgerüstet ist, die abhängig von den Umgebungsbedingungen Feuchtigkeit aufnimmt, speichert und abgibt (gestrichelte Linie), wobei das die Substanz, die abhängig von den Umgebungsbedingungen Feuchtigkeit aufnimmt, speichert und abgibt, enthaltene Fugendichtungsband unerwünschte, insbesondere über einen Sollwert hinausgehende Erhöhungen der relativen Luftfeuchtigkeit, insbesondere unerwünschte Feuchtespitzen, gemäß a) abpuffert und gemäß b) verzögert abpuffert.

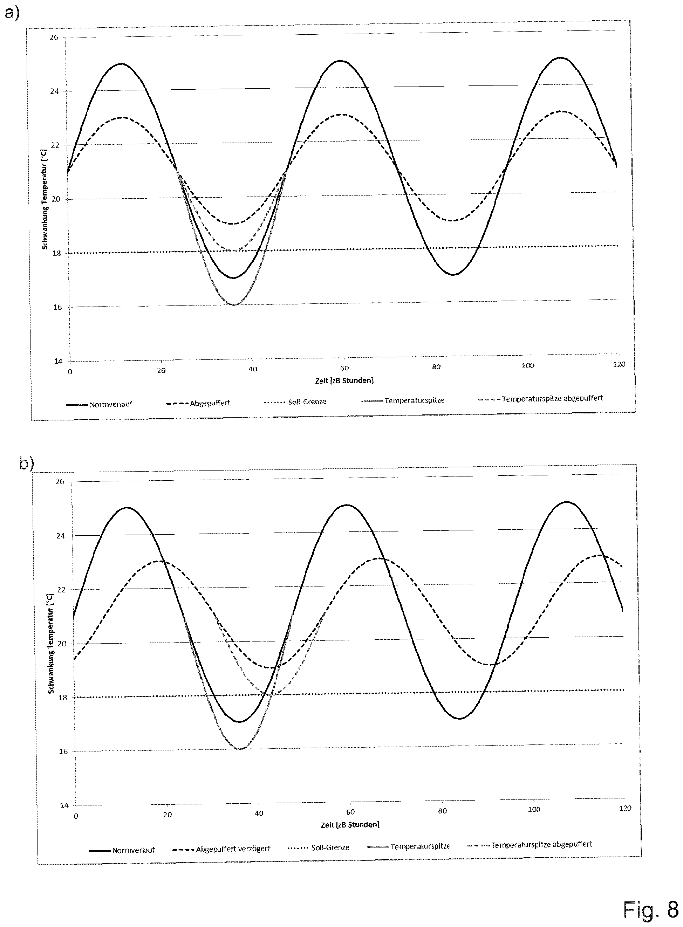

- Fig. 8: in schematischer Darstellung die in oder an einer Fuge auftretenden Temperaturschwankungen über einen Zeitraum bei Verwendung eines herkömmlichen Fugendichtungsbandes (durchgezogene Linie) und bei Verwendung eines Fugendichtungsbandes, das einen Schaumstoff aufweist, der mit der Substanz ausgerüstet ist, die abhängig von den Umgebungsbedingungen Wärme aufnimmt, speichert und abgibt (gestrichelte Linie), wobei das die Substanz, die abhängig von den Umgebungsbedingungen Wärme aufnimmt, speichert und abgibt, enthaltene Fugendichtungsband unerwünschte, insbesondere unter einen Sollwert fallende Temperaturen, insbesondere unerwünschte Temperaturspitzen, gemäß a) abpuffert und gemäß b) verzögert abpuffert.

In der Zeichnung sind die für das Verständnis der Erfindung wesentlichen Merkmale dargestellt und erläutert. Werden in den Figuren gleiche Bezugsziffern verwendet, so bezeichnen diese gleiche Teile.

Fig. 1 zeigt eine schematische Darstellung eines in Rollenform vorrätig gehaltenen und vorkomprimierten ersten Fugendichtungsbandes 10 in Seitenansicht mit einem bereits abgerollten, zurückgestellten Abschnitt in perspektivischer Ansicht, wobei das Fugendichtungsband 10 einen Schaumstoff 12 aufweist. Das Fugendichtungsband 10 weist zwei Längsseiten 14, 16 sowie eine im Einbauzustand des Fugendichtungsbandes 10 an die eine Fugenflanke angrenzende Oberseite 18 und eine im Einbauzustand des Fugendichtungsbandes 10 an die gegenüberliegende Fugenflanke angrenzende Unterseite 20 auf. Dieser allgemeine Aufbau des Fugendichtbandes 10 ist Stand der Technik.

Fig. 2 zeigt nun in schematischer Darstellung Varianten des in Fig. 1 gezeigten Fugendichtungsbandes, jeweils mit einer auf der Unterseite 20 angeordneten und mit einem Abdeckpapier 22 versehenen Selbstklebeschicht 24, in Form eines Ausschnitts a) gemäß Stand der Technik, und dann erfindungsgemäß b) mit einer die Substanz, die abhängig von den Umgebungsbedingungen Wärme aufnimmt, speichert und abgibt, aufweisenden Beschichtung 26 auf einer Längsseite 14 des Schaumstoffs 12, c) mit einer die Substanz, die abhängig von den Umgebungsbedingungen Wärme aufnimmt, speichert und abgibt, aufweisenden Beschichtung 28 auf der Oberseite 18 des Schaumstoffs 12, d) mit einer die Substanz, die abhängig von den Umgebungsbedingungen Wärme aufnimmt, speichert und abgibt, aufweisenden Beschichtung 30 auf der Unterseite 20 des Schaumstoffs 12, nämlich zwischen Schaumstoff 12 und Selbstklebeschicht 24, e) mit einer die Substanz, die abhängig von den Umgebungsbedingungen Wärme aufnimmt, speichert und abgibt, aufweisenden Beschichtung 28 auf einer Längsseite 14 des Schaumstoffs 12 und mit einer die Substanz, die abhängig von den Umgebungsbedingungen Wärme aufnimmt, speichert und abgibt, aufweisenden Beschichtung 28 auf der Oberseite 18 des Schaumstoffs 12, f) mit einer die Substanz, die abhängig von den Umgebungsbedingungen Wärme aufnimmt, speichert und abgibt, aufweisenden Beschichtung 26, 32 auf beiden Längsseiten 14, 16 des Schaumstoffs 12 und mit einer die Substanz, die abhängig von den Umgebungsbedingungen Wärme aufnimmt, speichert und abgibt, aufweisenden Beschichtung 28 auf der Oberseite 18 des Schaumstoffs 12 und g) mit einer die Substanz, die abhängig von den Umgebungsbedingungen Wärme aufnimmt, speichert und abgibt, aufweisenden Beschichtung 26, 32 auf beiden Längsseiten 14, 16 des Schaumstoffs 12 sowie mit einer die Substanz, die abhängig von den Umgebungsbedingungen Wärme aufnimmt, speichert und abgibt, aufweisenden Beschichtung 28 auf der Oberseite 18 des Schaumstoffs 12 und mit einer die Substanz, die abhängig von den Umgebungsbedingungen Wärme aufnimmt, speichert und abgibt, aufweisenden Beschichtung 30 auf der Unterseite 20 des Schaumstoffs 12, nämlich zwischen Schaumstoff 12 und Selbstklebeschicht 24. Selbstverständlich ist die Selbstklebeschicht mit Abdeckfolie im Rahmen der Erfindung optional.

Fig. 3 zeigt in schematischer Darstellung Varianten des in Fig. 1 gezeigten Fugendichtungsbandes, jeweils mit einer auf der Unterseite 20 angeordneten und mit einem Abdeckpapier 22 versehenen Selbstklebeschicht 24, in Form eines Ausschnitts, und zwar erfindungsgemäß a) mit homogen im Schaumstoff 120 verteilter Substanz, die abhängig von den Umgebungsbedingungen Wärme aufnimmt, speichert und abgibt, b) wie a), aber zusätzlich mit einer die Substanz, die abhängig von den Umgebungsbedingungen Wärme aufnimmt, speichert und abgibt, aufweisenden Beschichtung 26 auf einer Längsseite 14 des Schaumstoffs 120, c) wie a), aber zusätzlich mit einer die Substanz, die abhängig von den Umgebungsbedingungen Wärme aufnimmt, speichert und abgibt, aufweisenden Beschichtung 28 auf der Oberseite 18 des Schaumstoffs 120, d) wie a), aber zusätzlich mit einer die Substanz, die abhängig von den Umgebungsbedingungen Wärme aufnimmt, speichert und abgibt, aufweisenden Beschichtung 30 auf der Unterseite 20 des Schaumstoffs 120, nämlich zwischen Schaumstoff 120 und Selbstklebeschicht 24, e) wie a), aber zusätzlich mit einer die Substanz, die abhängig von den Umgebungsbedingungen Wärme aufnimmt, speichert und abgibt, aufweisenden Beschichtung 26 auf einer Längsseite 14 des Schaumstoffs 120 und mit einer die Substanz, die abhängig von den Umgebungsbedingungen Wärme aufnimmt, speichert und abgibt, aufweisenden Beschichtung 28 auf der Oberseite 18 des Schaumstoffs 120, f) wie a), aber zusätzlich mit einer die Substanz, die abhängig von den Umgebungsbedingungen Wärme aufnimmt, speichert und abgibt, aufweisenden Beschichtung 26, 32 auf beiden Längsseiten 14, 16 des Schaumstoffs 120 und mit einer die Substanz, die abhängig von den Umgebungsbedingungen Wärme aufnimmt, speichert und abgibt, aufweisenden Beschichtung 28 auf der Oberseite 18 des Schaumstoffs 120 und g) wie a), aber zusätzlich mit einer die Substanz, die abhängig von den Umgebungsbedingungen Wärme aufnimmt, speichert und abgibt, aufweisenden Beschichtung 26, 32 auf beiden Längsseiten 14, 16 des Schaumstoffs 120 sowie mit einer die Substanz, die abhängig von den Umgebungsbedingungen Wärme aufnimmt, speichert und abgibt, aufweisenden Beschichtung 28 auf der Oberseite 18 des Schaumstoffs 120 und mit einer die Substanz, die abhängig von den Umgebungsbedingungen Wärme aufnimmt, speichert und abgibt, aufweisenden Beschichtung 30 auf der Unterseite 20 des Schaumstoffs 20, nämlich zwischen Schaumstoff 120 und Selbstklebeschicht 24. Selbstverständlich ist die Selbstklebeschicht 24 mit Abdeckfolie 22 im Rahmen der Erfindung optional.

Fig. 4 zeigt eine schematische Darstellung eines in Rollenform vorrätig gehaltenen und vorkomprimierten zweiten Fugendichtungsbandes 10 in Seitenansicht mit einem bereits abgerollten, zurückgestellten Abschnitt in perspektivischer Ansicht. Das Fugendichtungsband 10 weist zwei Längsseiten 14, 16 sowie eine im Einbauzustand des Fugendichtungsbandes 10 an die eine Fugenflanke angrenzende Oberseite 18 und eine im Einbauzustand des Fugendichtungsbandes 10 an die gegenüberliegende Fugenflanke angrenzende Unterseite 20 auf. Zwischen Oberseite 18 und Unterseite 20 sowie parallel bzw. nahezu parallel zu den Längsseiten 14, 16 verlaufen zwei Membranschichten 34 jeweils in Längsrichtung. Das Fugendichtungsband 10 umfasst drei Schaumstoffe bzw. Schaumstoffelemente 12a, 12b, 12c, wobei die zwei Membranschichten 22 jeweils zwischen zwei Schaumstoffelementen 12a, 12b und 12b, 12c angeordnet sind. Dieser allgemeine Aufbau des Fugendichtbandes 10 ist Stand der Technik.

Fig. 5 zeigt in schematischer Darstellung Varianten des in Fig. 4 gezeigten Fugendichtungsbandes 10, in Form eines Ausschnitts a) gemäß Stand der Technik, b) mit homogen in einem außenliegenden Schaumstoffelement 120a verteilter Substanz, die abhängig von den Umgebungsbedingungen Wärme aufnimmt, speichert und abgibt, c) mit homogen in einem innenliegenden Schaumstoffelement 120b verteilter Substanz, die abhängig von den Umgebungsbedingungen Wärme aufnimmt, speichert und abgibt, d) mit homogen in einem außen- und in einem innenliegenden Schaumstoffelement 120a, 120b verteilter Substanz, die abhängig von den Umgebungsbedingungen Wärme aufnimmt, speichert und abgibt, e) wie a), aber mit einer die Substanz, die abhängig von den Umgebungsbedingungen Wärme aufnimmt, speichert und abgibt, aufweisenden Beschichtung 26 auf der Längsseite 14 eines außenliegenden Schaumstoffelements 12a, f) wie b), aber zusätzlich mit einer die Substanz, die abhängig von den Umgebungsbedingungen Wärme aufnimmt, speichert und abgibt, aufweisenden Beschichtung 26 auf der Längsseite 14 des außenliegenden die Substanz, die abhängig von den Umgebungsbedingungen Wärme aufnimmt, speichert und abgibt, aufweisenden Schaumstoffelements 120a, g) wie c), aber zusätzlich mit einer die Substanz, die abhängig von den Umgebungsbedingungen Wärme aufnimmt, speichert und abgibt, aufweisenden Beschichtung 26 auf einer Längsseite 14 des außenliegenden Schaumstoffelements 12a, h) wie d) aber zusätzlich mit einer die Substanz, die abhängig von den Umgebungsbedingungen Wärme aufnimmt, speichert und abgibt, aufweisenden Beschichtung 26 auf der Längsseite 14 des außenliegenden die Substanz, die abhängig von den Umgebungsbedingungen Wärme aufnimmt, speichert und abgibt, aufweisenden Schaumstoffelements 120a, i) wie a), aber zusätzlich mit einer die Substanz, die abhängig von den Umgebungsbedingungen Wärme aufnimmt, speichert und abgibt, aufweisenden Beschichtung 28 auf der Oberseite 18 der Schaumstoffelemente 12a, 12b, 12c, j) wie b), aber zusätzlich mit einer die Substanz, die abhängig von den Umgebungsbedingungen Wärme aufnimmt, speichert und abgibt, aufweisenden Beschichtung 28 auf der Oberseite 18 der Schaumstoffelemente 120a, 12b, 12c, k) wie c) aber zusätzlich mit einer die Substanz, die abhängig von den Umgebungsbedingungen Wärme aufnimmt, speichert und abgibt, aufweisenden Beschichtung 28 auf der Oberseite 18 der Schaumstoffelemente 12a, 120b, 12c, l) wie d), aber zusätzlich mit einer die Substanz, die abhängig von den Umgebungsbedingungen Wärme aufnimmt, speichert und abgibt, aufweisenden Beschichtung 28 auf der Oberseite 18 der Schaumstoffelemente 120a, 120b, 12c, m) wie e), aber zusätzlich mit einer die Substanz, die abhängig von den Umgebungsbedingungen Wärme aufnimmt, speichert und abgibt, aufweisenden Beschichtung 28 auf der Oberseite 18 der Schaumstoffelemente 12a, 12b, 12c, n) wie f), aber zusätzlich mit einer die Substanz, die abhängig von den Umgebungsbedingungen Wärme aufnimmt, speichert und abgibt, aufweisenden Beschichtung 28 auf der Oberseite 18 der Schaumstoffelemente 120a, 12b, 12c, o) wie g) aber zusätzlich mit einer die Substanz, die abhängig von den Umgebungsbedingungen Wärme aufnimmt, speichert und abgibt, aufweisenden Beschichtung 28 auf der Oberseite 18 der Schaumstoffelemente 12a, 120b, 12c, und p) wie h), aber zusätzlich mit einer die Substanz, die abhängig von den Umgebungsbedingungen Wärme aufnimmt, speichert und abgibt, aufweisenden Beschichtung 28 auf der Oberseite 18 der Schaumstoffelemente 120a, 120b, 12c.

Fig. 6 zeigt in schematischer Darstellung weitere Varianten des in Fig. 4 gezeigten Fugendichtungsbandes 10, in Form eines Ausschnitts a) mit homogen in allen Schaumstoffelementen 120a, 120b und 120c verteilter Substanz, die abhängig von den Umgebungsbedingungen Wärme aufnimmt, speichert und abgibt, b) wie a), aber mit einer die Substanz, die abhängig von den Umgebungsbedingungen Wärme aufnimmt, speichert und abgibt, aufweisenden Beschichtung 26 auf der Längsseite 14 eines außenliegenden Schaumstoffelements 120a, c) wie a), aber zusätzlich mit einer die Substanz, die abhängig von den Umgebungsbedingungen Wärme aufnimmt, speichert und abgibt, aufweisenden Beschichtung 28 auf der Oberseite 18 der Schaumstoffelemente 120a, 120b, 120c, d) wie b), aber zusätzlich mit einer die Substanz, die abhängig von den Umgebungsbedingungen Wärme aufnimmt, speichert und abgibt, aufweisenden Beschichtung 28 auf der Oberseite 18 der Schaumstoffelemente 120a, 120b, 120c.

Fig. 7 zeigt beispielhaft in schematischer Darstellung die in oder an einer Fuge auftretenden Schwankungen der relativen Luftfeuchtigkeit über einen Zeitraum bei Verwendung eines herkömmlichen Fugendichtungsbandes (durchgezogene Linien) und bei Verwendung eines Fugendichtungsbandes, das einen Schaumstoff aufweist, der mit der Substanz ausgerüstet ist, die abhängig von den Umgebungsbedingungen Feuchtigkeit aufnimmt, speichert und abgibt (gestrichelte Linie), wobei das die Substanz, die abhängig von den Umgebungsbedingungen Feuchtigkeit aufnimmt, speichert und abgibt, enthaltende Fugendichtungsband unerwünschte, insbesondere über einen Sollwert hinausgehende Erhöhungen der relativen Luftfeuchtigkeit, insbesondere unerwünschte Feuchtespitzen, gemäß a) abpuffert und gemäß b) verzögert abpuffert. Mit anderen Worten wirkt der Abpufferungseffekt gemäß a) sofort und ohne Zeitverzögerung, während das Fugendichtungsband gemäß b) träger reagiert und der Abpufferungseffekt mit einem gewissen zeitlichen Versatz wirkt.

Fig. 8 zeigt in schematischer Darstellung die in oder an einer Fuge auftretenden Temperaturschwankungen über einen Zeitraum bei Verwendung eines herkömmlichen Fugendichtungsbandes (durchgezogene Linie) und bei Verwendung eines Fugendichtungsbandes, das einen Schaumstoff aufweist, der mit der Substanz ausgerüstet ist, die abhängig von den Umgebungsbedingungen Wärme aufnimmt, speichert und abgibt (gestrichelte Linie), wobei das die Substanz, die abhängig von den Umgebungsbedingungen Wärme aufnimmt, speichert und abgibt, enthaltende Fugendichtungsband unerwünschte, insbesondere unter einen Sollwert fallende Temperaturen, insbesondere unerwünschte Temperaturspitzen, gemäß a) abpuffert und gemäß b) verzögert abpuffert. Mit anderen Worten wirkt der Abpufferungseffekt gemäß a) sofort und ohne Zeitverzögerung, während das Fugendichtungsband gemäß b) träger reagiert und der Abpufferungseffekt mit einem gewissen zeitlichen Versatz wirkt.

## Patentansprüche

1. Fugendichtungsband umfassend einen Schaumstoff, wobei das Fugendichtungsband komprimierbar und rückstellfähig ist, **dadurch gekennzeichnet, dass** der Schaumstoff mit wenigstens einer Substanz ausgerüstet ist, die abhängig von den Umgebungsbedingungen Wärme aufnimmt, speichert und abgibt, wobei es sich bei der Substanz, die abhängig von den Umgebungsbedingungen Wärme aufnimmt, speichert und abgibt, um ein Phasenwechselmaterial, nämlich PCM, handelt.

2. Fugendichtungsband nach Anspruch 1, **dadurch gekennzeichnet, dass** der Schaumstoff mit wenigstens einer Substanz ausgerüstet ist, die abhängig von den Umgebungsbedingungen Feuchtigkeit aufnimmt, speichert und abgibt, wobei die Substanz, die abhängig von den Umgebungsbedingungen Wärme aufnimmt, speichert und abgibt, eine andere ist als die Substanz, die abhängig von den Umgebungsbedingungen Feuchtigkeit aufnimmt, speichert und abgibt.

3. Fugendichtungsband nach wenigstens einem der vorherigen Ansprüche, **dadurch gekennzeichnet, dass** der Schaumstoff mit einer Imprägniermasse imprägniert ist, wobei die Imprägniermasse die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, enthält.

4. Fugendichtungsband nach wenigstens einem der vorherigen Ansprüche, **dadurch gekennzeichnet, dass** die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, derart dimensioniert ist, dass diese auf den Schaumstoff und/oder vorzugsweise in die Poren des Schaumstoffs des Fugendichtungsbandes bringbar ist.

5. Fugendichtungsband nach wenigstens einem der vorherigen Ansprüche, **dadurch gekennzeichnet, dass** die mittlere Partikelgröße d₅₀ der Substanz, die abhängig von den Umgebungsbedingungen Wärme aufnimmt, speichert und abgibt, und/oder der Substanz, die abhängig von den Umgebungsbedingungen Feuchtigkeit aufnimmt, speichert und abgibt, weniger als 500 µm, vorzugsweise weniger als 100 µm, ganz besonders bevorzugt weniger als 10 µm, noch bevorzugter weniger als 5 µm beträgt.

6. Fugendichtungsband nach wenigstens einem der vorherigen Ansprüche, **dadurch gekennzeichnet, dass** es sich bei der Substanz, die abhängig von den Umgebungsbedingungen Feuchtigkeit aufnimmt, speichert und abgibt, um wenigstens ein Material handelt, das ausgewählt ist aus der Gruppe, die Calciumsilikat, Gips, Gipskalk, Rotkalk, Lehm, Cellulose, Natriumpolyacrylat oder Kombinationen einzelner oder aller vorgenannter Materialien umfasst.

7. Fugendichtungsband nach wenigstens einem der vorherigen Ansprüche, **dadurch gekennzeichnet, dass** die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, in und/oder auf dem Schaumstoff homogen verteilt ist.

8. Fugendichtungsband nach wenigstens einem der vorherigen Ansprüche, **dadurch gekennzeichnet, dass** die Imprägniermasse die Substanz, die abhängig von den Umgebungsbedingungen Wärme aufnimmt, speichert und abgibt, und/oder die Substanz, die abhängig von den Umgebungsbedingungen Feuchtigkeit aufnimmt, speichert und abgibt, in einer Menge von 5 bis 80 Gew.-% i.Tr., vorzugsweise von 5 bis 50 Gew.-% i.Tr., besonders bevorzugt 20 bis 30 Gew.-% i.Tr., jeweils bezogen auf 100 Gew.-% i.Tr. Imprägniermasse enthält.

## Claims

1. Joint sealing tape comprising a foam, the joint sealing tape being compressible and resilient, **characterized in that** the foam is equipped with at least one substance which depending on the ambient conditions absorbs, stores and releases heat, wherein the substance which depending on the ambient conditions absorbs, stores and releases heat is a phase change material, namely PCM.

2. Joint sealing tape according to Claim 1, **characterized in that** the foam is equipped with at least one substance which depending on the ambient conditions absorbs, stores and releases moisture, wherein the substance which depending on the ambient conditions absorbs, stores and releases heat is different from the substance which depending on the ambient conditions absorbs, stores and releases moisture.

3. Joint sealing tape according to at least one of the preceding claims, **characterized in that** the foam is impregnated with an impregnating composition, wherein the impregnating composition comprises the substance which depending on the ambient conditions absorbs, stores and releases heat and/or the substance which depending on the ambient conditions absorbs, stores and releases moisture.

4. Joint sealing tape according to at least one of the preceding claims, **characterized in that** the substance which depending on the ambient conditions absorbs, stores and releases heat and/or the substance which depending on the ambient conditions absorbs, stores and releases moisture are/is dimensioned in such a way that they/it can be brought onto the foam and/or preferably into the pores of the foam of the joint sealing tape.

5. Joint sealing tape according to at least one of the preceding claims, **characterized in that** the mean particle size d₅₀ of the substance which depending on the ambient conditions absorbs, stores and releases heat and/or of the substance which depending on the ambient conditions absorbs, stores and releases moisture is less than 500 µm, preferably less than 100 µm, very particularly preferably less than 10 µm, more preferably still less than 5 µm.

6. Joint sealing tape according to at least one of the preceding claims, **characterized in that** the substance which depending on the ambient conditions absorbs, stores and releases moisture comprises at least one material selected from the group which encompasses calcium silicate, gypsum, gypsum-lime, red lime, clay, cellulose, sodium polyacrylate or combinations of individual or all aforesaid materials.

7. Joint sealing tape according to at least one of the preceding claims, **characterized in that** the substance which depending on the ambient conditions absorbs, stores and releases heat and/or the substance which depending on the ambient conditions absorbs, stores and releases moisture are/is distributed homogeneously in and/or on the foam.

8. Joint sealing tape according to at least one of the preceding claims, **characterized in that** the impregnating composition comprises the substance which depending on the ambient conditions absorbs, stores and releases heat and/or the substance which depending on the ambient conditions absorbs, stores and releases moisture in an amount of 5 to 80% by weight on a dry basis, preferably of 5 to 50% by weight on a dry basis, particularly preferably 20 to 30% by weight on a dry basis, based in each case on 100% by weight of impregnating composition on a dry basis.

## Revendications

1. Bande d'étanchéité comprenant une mousse, la bande d'étanchéités étant compressible et élastique, **caractérisée en ce que** la mousse est pourvue d'au moins une substance qui, en fonction des conditions ambiantes, absorbe, stocke et libère de la chaleur, la substance qui, en fonction des conditions ambiantes, absorbe, stocke et libère de la chaleur, étant un matériau à changement de phase, à savoir un PCM.

2. Bande d'étanchéité selon la revendication 1, **caractérisée en ce que** la mousse est pourvue d'au moins une substance qui, en fonction des conditions ambiantes, absorbe, stocke et libère de l'humidité, la substance qui, en fonction des conditions ambiantes, absorbe, stocke et libère de la chaleur, étant différente de la substance qui, en fonction des conditions ambiantes, absorbe, stocke et libère de l'humidité.

3. Bande d'étanchéité selon au moins l'une quelconque des revendications précédentes, **caractérisée en ce que** la mousse est imprégnée avec une masse d'imprégnation, la masse d'imprégnation contenant la substance qui, en fonction des conditions ambiantes, absorbe, stocke et libère de la chaleur, et/ou la substance qui, en fonction des conditions ambiantes, absorbe, stocke et libère de l'humidité.

4. Bande d'étanchéité selon au moins l'une quelconque des revendications précédentes, **caractérisée en ce que** la substance qui, en fonction des conditions ambiantes, absorbe, stocke et libère de la chaleur, et/ou la substance qui, en fonction des conditions ambiantes, absorbe, stocke et libère de l'humidité est dimensionnée de telle manière qu'elle peut être amenée sur la mousse et/ou de préférence dans les pores de la mousse de la bande d'étanchéité.

5. Bande d'étanchéité selon au moins l'une quelconque des revendications précédentes, **caractérisée en ce que** la taille moyenne de particule d₅₀ de la substance qui, en fonction des conditions ambiantes, absorbe, stocke et libère de la chaleur, et/ou de la substance qui, en fonction des conditions ambiantes, absorbe, stocke et libère de l'humidité, est inférieure à 500 µm, de préférence inférieure à 100 µm, tout particulièrement préférablement inférieure à 10 µm, plus préférablement inférieure à 5 µm.

6. Bande d'étanchéité selon au moins l'une quelconque des revendications précédentes, **caractérisée en ce que** la substance qui, en fonction des conditions ambiantes, absorbe, stocke et libère de l'humidité, est au moins un matériau qui est choisi dans le groupe qui comprend le silicate de calcium, le gypse, le chaux-plâtre, le calcaire rouge, l'argile, une cellulose, un polyacrylate de sodium ou des combinaisons de certains ou de tous les matériaux mentionnés précédemment.

7. Bande d'étanchéité selon au moins l'une quelconque des revendications précédentes, **caractérisée en ce que** la substance qui, en fonction des conditions ambiantes, absorbe, stocke et libère de la chaleur, et/ou la substance qui, en fonction des conditions ambiantes, absorbe, stocke et libère de l'humidité, est distribuée de manière homogène dans et/ou sur la mousse.

8. Bande d'étanchéité selon au moins l'une quelconque des revendications précédentes, **caractérisée en ce que** la masse d'imprégnation contient la substance qui, en fonction des conditions ambiantes, absorbe, stocke et libère de la chaleur, et/ou la substance qui, en fonction des conditions ambiantes, absorbe, stocke et libère de l'humidité, en une quantité de 5 à 80 % en poids sec, de préférence de 5 à 50 % en poids sec, particulièrement préférablement 20 à 30 % en poids sec, à chaque fois par rapport à 100 % en poids sec de masse d'imprégnation.
